# EUROPEAN PATENT APPLICATION

(11) **EP 4 742 000 A1**
(43) Date of publication of application: **13.05.2026**
(21) Application number: 25213271.7
(22) Date of filing: 04.11.2025
(51) Int. Cl.: G06F 1/3225, G06F 1/3234, G06F 3/06

(54) **ELECTRONIC APPARATUS**

(30) Priority: 07.11.2024 JP 2024194861
(71) Applicant: KYOCERA Document Solutions Inc., Osaka-shi, Osaka 540-8585 (JP)
(72) Inventor: TOMOFUJI, Shinji, Osaka, 540-8585 (JP)
(74) Representative: Winter, Brandl - Partnerschaft mbB

(57) **Abstract**

An electronic apparatus includes a storage device that includes a non-volatile memory, and a controller. The controller is configured to be able to set a power supply mode of the electronic apparatus as a sleep mode that maintains power supply to the storage device. Further, when the controller changes the power supply mode to the sleep mode, the controller transmits a shutdown notification command to the storage device and thereby stops a confirmation operation of a data status of the storage device.

## Description

### BACKGROUND

### 1. FIELD OF THE PRESENT INVENTION

The present invention relates to an electronic apparatus.

### 2. DESCRIPTION OF THE RELATED ART

When a main body of an information device moves to a power saving mode, the information device counts the number of times of the movement to the power saving mode; and if the number of the movement times is less than a predetermined number of times, the information device does not cause a storage device (hard disk drive) to move to the power saving mode, and when the number of the movement times reaches the predetermined number of times, the information device causes the storage device (hard disk drive) to move to the power saving mode.

Recently, a storage device such as SSD (Solid State Drive) that uses a rewritable non-volatile memory is sometimes used. In such a storage device, in a period that there are no accesses from an external device, its internal controller performs an operation to confirm a data status of the non-volatile memory.

However, if accesses to the non-volatile memory are frequently performed to confirm a data status as mentioned, trouble such as read disturb may occur. Therefore, if power supply to the storage device is maintained in a sleep mode (i.e. power saving mode), a status that there are no accesses to the storage device from an external device continues and therefore such trouble may occur in the sleep mode.

### SUMMARY

An electronic apparatus according to the present invention includes a storage device that includes a non-volatile memory, and a controller. The controller is configured to be able to set a power supply mode of the electronic apparatus as a sleep mode that maintains power supply to the storage device. Further, when the controller changes the power supply mode to the sleep mode, the controller transmits a shutdown notification command to the storage device and thereby stops a confirmation operation of a data status of the storage device.

These and other objects, features and advantages of the present invention will become more apparent upon reading of the following detailed description along with the accompanied drawings.

### BRIEF DESCRIPTION OF THE DRAWINGS

Fig. 1 shows a block diagram that indicates an example of an electronic apparatus according to an embodiment of the present invention; and
Fig. 2 shows a flowchart that explains a behavior of the electronic apparatus 1 shown in Fig. 1.

### DETAILED DESCRIPTION

Hereinafter, an embodiment according to an aspect of the present invention will be explained with reference to drawings.

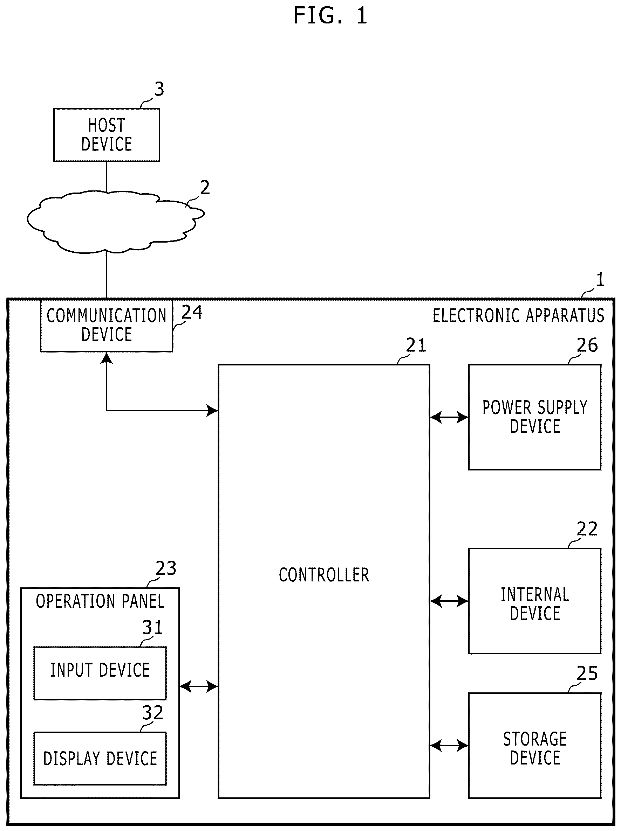

Fig. 1 shows a block diagram that indicates an example of an electronic apparatus according to an embodiment of the present invention. The electronic apparatus 1 shown in Fig. 1 is an image forming apparatus such as printer, multi function peripheral. As shown in Fig. 1. the electronic apparatus 1 includes a controller 21, an internal device 22 such as printing device, an operation panel 23, a communication device 24, a storage device 25, and a power supply device 26.

The controller 21 includes a computer, an ASIC (Application Specific Integrated Circuit) and/or the like and thereby embodies sorts of processing units with software and/or hardware, controls the internal device 22, the operation panel 23 and the like and performs sorts of data processes, and reads and writes data required for the data process, data of a user or the like from/to the storage device 25.

The controller 21 changes a power supply mode of this electronic apparatus from one to the other among a normal mode and a sleep mode (power saving mode) of which electric power consumption is lower than that of the normal mode.

The operation panel 23 includes an input device 31 such as touch panel and/or head key that receives a user operation, and a display device 32 such as a liquid crystal display that displays an operation screen to a user.

The communication device 24 is a wired or wireless network interface or the like and performs data communication with a host apparatus 3 or the like through a network 2.

The storage device 25 includes a non-volatile memory and a controller (internal controller) for the non-volatile memory, and the internal controller communicates with the controller 21 and performs data read and data write from/to the non-volatile memory.

In this embodiment, the storage device is an SSD, and the aforementioned non-volatile memory is a NAND flash memory.

The power supply device 26 supplies electric power from a commercial power supply to each internal part, and individually turns on and off power supply to the storage device 25 correspondingly to a power supply mode.

Using the power supply device 26, the controller 21 can set the power supply mode of the electronic apparatus 1 as a sleep mode (second sleep mode mentioned below) that maintains power supply to the storage device 25. In this sleep mode, power supply to at least one of internal devices other than the storage device 25 is cut off.

Further, when the controller 21 changes the power supply mode to the sleep mode (second sleep mode), the controller 21 transmits a shutdown notification command to the storage device 25 and thereby stops a confirmation operation of a data status of the storage device 25. The shutdown notification command is transmitted in advance when the controller 21 side shuts down the storage device 25 to restrain data damage in the storage device 25 due to the shut down.

For example, if the storage device 25 is an SSD of a NAND flash, the shutdown notification command is a StandbyImmediate command.

Further, in this embodiment, when the controller 21 changes the power supply mode to the sleep mode (second sleep mode), if a type of the storage device 25 is a specific type, the controller 21 does not transmit the shutdown notification command to the storage device 25. If the type of the storage device 25 is another type than the specific type, the shutdown notification command is transmitted. Here, the specific type is a type of a storage device that performs a write operation to a specific memory area when receiving the shutdown notification command. Here, the type of the storage device 25 is either a model number of the storage device 25 and/or a firmware version of the storage device 25.

Further, in this embodiment, when the power supply mode of the electronic apparatus 1 is the sleep mode, the controller 21 selects one of a first sleep mode that cuts off power supply to the storage device 25 and a second sleep mode that maintains power supply to the storage device 25.

For example, the sleep mode may be able to be set as any one of the first sleep mode and the second sleep mode, selected by a user. In this case, if a frequency that accesses to the storage device 25 occur in the first sleep mode exceeds a predetermined threshold value, the controller 21 may present to the user a message that prompts to change the first sleep mode to the second sleep mode. Further, if a frequency that accesses to the storage device 25 occur in the second sleep mode becomes less than the predetermined threshold value, the controller 21 may present to the user a message that prompts to change the second sleep mode to the first sleep mode.

For example, these messages are displayed on the display device 32 or the host apparatus 3, the controller 21 selects the first or second sleep mode and sets the sleep mode as the selected mode in accordance with a predetermined user operation to the input device 31 or the host apparatus 3. If the host apparatus 3 is used as a user interface, a driver in the host apparatus 3 displays the aforementioned messages and transmits information on the user operation to the controller 21.

Alternatively, if a frequency that accesses to the storage device 25 occur in the first sleep mode exceeds a predetermined threshold value, the controller 21 may automatically change the power supply mode from the first sleep mode to the second sleep mode. Further, if a frequency that accesses to the storage device 25 occur in the second sleep mode becomes less than the predetermined threshold value, the controller 21 may automatically change the power supply mode from the second sleep mode to the first sleep mode.

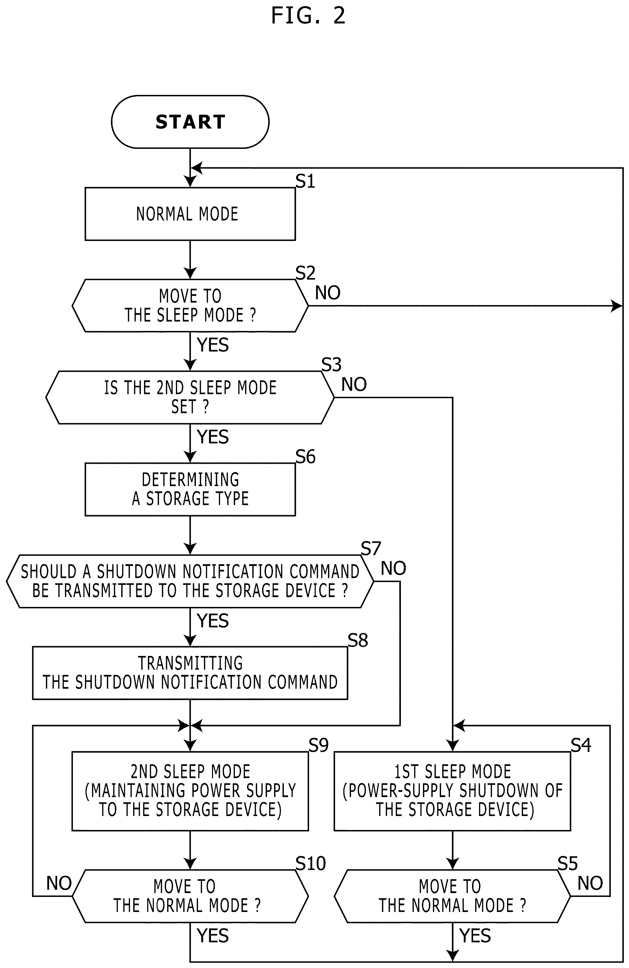

The following part explains the aforementioned electronic apparatus 1. Fig. 2 shows a flowchart that explains a behavior of the electronic apparatus 1 shown in Fig. 1.

When the electronic apparatus 1 starts, the controller 21 sets the power supply mode as the normal mode (in Step S1), and afterward, repeatedly determines whether the power supply mode should be changed to the sleep mode or not (in Step S2). For example, if a non operation period exceeds a predetermined value or if a specific user operation is detected, it is determined that the power supply mode should be changed to the sleep mode.

If it is determined that the power supply mode should be changed to the sleep mode, the controller 21 determines whether the second sleep mode is set as the sleep mode (in Step S3).

Here, if the second sleep mode is not set (i.e. the first sleep mode is set), then the controller 21 cuts off power supply of the storage device 25 using the power supply device 26, and changes the power supply to the sleep mode (in Step S4).

Afterward, the controller 21 repeatedly determines whether the power supply mode should be changed to the normal mode or not (in Step S5). For example, if a user operation to the input device 31 is detected or if a job request of a print job or the like is received by the communication device 24, it is determined that the power supply mode should be changed to the normal mode.

Contrarily, if in Step S3 it is determined the second sleep mode is set, then the controller 21 determines a type of the storage device 25 (in Step S6), and determines whether the shutdown notification command should be transmitted to the storage device 25 or not on the basis of the determined type (in Step S7).

If it is determined that the shutdown notification command should be transmitted to the storage device 25, the controller 25 transmits the shutdown notification command to the storage device 25 and thereby stops a confirmation operation of a data status of the storage device 25 (in Step S8), and afterward, maintains power supply to the storage device 25 and changes the power supply mode to the sleep mode (in Step S9).

Contrarily, if it is determined that the shutdown notification command should not be transmitted to the storage device 25, the controller 21 does not transmit the shutdown notification command to the storage device 25, maintains power supply to the storage device 25 and changes the power supply mode to the sleep mode (in Step S9).

Afterward, the controller 21 repeatedly determines whether the power supply mode should be changed to the normal mode or not (in Step S10). For example, if a user operation to the input device 31 is detected or if a job request of a print job or the like is received by the communication device 24, the power supply mode is changed to the normal mode.

As mentioned, in the aforementioned embodiment, the electronic apparatus 1 includes the storage device 25 that includes a non-volatile memory and the controller 21 that can set a power supply mode of the electronic apparatus 1 as a sleep mode that maintains power supply to the storage device 25. Further, when the controller 21 changes the power supply mode to the sleep mode, the controller 21 transmits a shutdown notification command to the storage device 25 and thereby stops a confirmation operation of a data status of the storage device 25.

Consequently, in the sleep mode that maintains power supply to the storage device 25, trouble of the non-volatile memory is restrained.

It should be understood that various changes and modifications to the embodiments described herein will be apparent to those skilled in the art. Such changes and modifications may be made without departing from the spirit and scope of the present subject matter and without diminishing its intended advantages. It is therefore intended that such changes and modifications be covered by the appended claims.

## Claims

1. An electronic apparatus, comprising:
a storage device that includes a non-volatile memory; and
a controller configured to be able to set a power supply mode of the electronic apparatus as a sleep mode that maintains power supply to the storage device;
wherein when the controller changes the power supply mode to the sleep mode, the controller transmits a shutdown notification command to the storage device and thereby stops a confirmation operation of a data status of the storage device.

2. The electronic apparatus according to claim 1, wherein when the controller changes the power supply mode to the sleep mode, if a type of the storage device is a specific type, then the controller does not transmit the shutdown notification command to the storage device; and
the specific type is a type of a storage device that performs a write operation to a specific memory area when receiving the shutdown notification command.

3. The electronic apparatus according to claim 2, wherein the type of the storage device is either a model number of the storage device or a firmware version of the storage device.

4. The electronic apparatus according to claim 1, wherein when the power supply mode of the electronic apparatus is the sleep mode, the controller selects one of a first sleep mode that cuts off power supply to the storage device and a second sleep mode that maintains power supply to the storage device;
the sleep mode is the first or second sleep mode that can be selected by a user; and
if a frequency that accesses to the storage device occur in the first sleep mode exceeds a predetermined threshold value, the controller presents to the user a message that prompts to change the first sleep mode to the second sleep mode.

5. The electronic apparatus according to claim 1, wherein when the power supply mode of the electronic apparatus is the sleep mode, the controller selects one of a first sleep mode that cuts off power supply to the storage device and a second sleep mode that maintains power supply to the storage device;
the sleep mode is the first or second sleep mode that can be selected by a user; and
if a frequency that accesses to the storage device occur in the second sleep mode becomes less than a predetermined threshold value, the controller presents to the user a message that prompts to change the second sleep mode to the first sleep mode.

6. The electronic apparatus according to claim 1, wherein when the power supply mode of the electronic apparatus is the sleep mode, the controller selects one of a first sleep mode that cuts off power supply to the storage device and a second sleep mode that maintains power supply to the storage device; and
if a frequency that accesses to the storage device occur in the first sleep mode exceeds a predetermined threshold value, the controller automatically changes the power supply mode of the electronic apparatus from the first sleep mode to the second sleep mode.

7. The electronic apparatus according to claim 1, wherein when the power supply mode of the electronic apparatus is the sleep mode, the controller selects one of a first sleep mode that cuts off power supply to the storage device and a second sleep mode that maintains power supply to the storage device; and
if a frequency that accesses to the storage device occur in the second sleep mode becomes less than a predetermined threshold value, the controller automatically changes the power supply mode of the electronic apparatus from the second sleep mode to the first sleep mode.

8. The electronic apparatus according to any of claims 1 to 7, wherein the non-volatile memory is a NAND flash memory; and
the shutdown notification command is a StandbyImmediate command.
